# EUROPEAN PATENT APPLICATION

(11) **EP 4 836 551 A1**
(43) Date of publication of application: **04.11.2026**
(21) Application number: 23962959.5
(22) Date of filing: 29.12.2023
(51) Int. Cl.: H04W 64/00

(54) **POSITIONING METHOD, TERMINAL DEVICE, AND POSITIONING DEVICE**

(71) Applicant: Quectel Wireless Solutions Co., Ltd., Shanghai 201601 (CN)
(72) Inventor: ZHAO, Zheng, Shanghai 201601 (CN)
(74) Representative: Fish & Richardson P.C.
(86) International application number: PCT/CN2023/143679
(87) International publication number: WO 2025/138286

(57) **Abstract**

Disclosed are a method for positioning, and a terminal device and a positioning device thereof. The method includes: receiving, by a terminal device, a first message from a network device, wherein the first message is used to instruct the terminal device to receive reference signals from the network device at different positions; receiving, by the terminal device at a first position, a first reference signal from the network device; and receiving, by the terminal device at a second position, a second reference signal from the network device; wherein first measurement information of the first reference signal and second measurement information of the second reference signal are used to position the terminal device.

## Description

### TECHNICAL FIELD

The present disclosure relates to the technical field of communications, and in particular, relates to a method for positioning, and a terminal device and a positioning device therefor.

### BACKGROUND

When positioning a terminal device, current common methods involve either positioning by the terminal device receiving reference signals from a plurality of network devices, or positioning by a plurality of network devices receiving reference signals from the terminal device. The positioning methods place high demands on the consistency of hardware performance among the plurality of network devices, which is not conducive to improving the positioning accuracy of the terminal device.

### SUMMARY

Embodiments of the present disclosure provide a method for positioning, and a terminal device and a positioning device therefor. Various aspects of the embodiments of the present disclosure are described hereinafter.

In a first aspect of the embodiments of the present disclosure, a method for positioning is provided. The method includes: receiving, by a terminal device, a first message from a network device, wherein the first message is used to instruct the terminal device to receive reference signals from the network device at different positions; receiving, by the terminal device at a first position, a first reference signal from the network device; and receiving, by the terminal device at a second position, a second reference signal from the network device; wherein first measurement information of the first reference signal and second measurement information of the second reference signal are used to position the terminal device.

In a second aspect of the embodiments of the present disclosure, a method for positioning is provided. The method includes: transmitting, by a positioning device, first configuration information to a plurality of base stations, wherein the first configuration information is used to configure time information for reference signals transmitted by the plurality of base stations; and receiving, by the positioning device, second configuration information from the plurality of base stations, wherein the second configuration information includes configuration information of the reference signals, wherein the configuration information is determined by the plurality of base stations based on the time information; wherein the reference signals transmitted by the plurality of base stations have identical time information, and the reference signals transmitted by the plurality of base stations are used to position a terminal device.

In a third aspect of the embodiments of the present disclosure, a terminal device is provided. The terminal device includes: a receiving unit, configured to receive a first message from a network device, wherein the first message is used to instruct the terminal device to receive reference signals from the network device at different positions. The receiving unit is further configured to receive, at a first position, a first reference signal from the network device; and receive, at a second position, a second reference signal from the network device; wherein first measurement information of the first reference signal and second measurement information of the second reference signal are used to position the terminal device.

In a fourth aspect of the embodiments of the present disclosure, a positioning device is provided. The positioning device is configured to transmit first configuration information to a plurality of base stations, wherein the first configuration information is used to configure time information for reference signals transmitted by the plurality of base stations; and the positioning device is further configured to receive second configuration information from the plurality of base stations, wherein the second configuration information includes configuration information of the reference signals, wherein the configuration information is determined by the plurality of base stations based on the time information; wherein the reference signals transmitted by the plurality of base stations have identical time information, and the reference signals transmitted by the plurality of base stations are used to position a terminal device.

In a fifth aspect of the embodiments of the present disclosure, a terminal device is provided. The terminal device includes a processor, a memory, and a communication interface. The memory is configured to store one or more computer programs, and the processor is configured to call the one or more computer programs stored in the memory to cause the terminal device to perform part or all of the steps in the method according to the first aspect.

In a sixth aspect of the embodiments of the present disclosure, a positioning device is provided. The positioning device includes a processor, a memory, and a communication interface. The memory is configured to store one or more computer programs, and the processor is configured to call the one or more computer programs stored in the memory to cause the positioning device to perform part or all of the steps in the method according to the second aspect.

In a seventh aspect of the embodiments of the present disclosure, a communication system is provided. The communication system includes the terminal device and/or the positioning device as described above. In some embodiments, the communication system may include other devices capable of interacting with the terminal device or the positioning device in the technical solutions according to the embodiments of the present disclosure.

In an eighth aspect of the embodiments of the present disclosure, a computer-readable storage medium is provided. The computer-readable storage medium stores one or more computer programs therein. The one or more computer programs, when loaded and run by a communication device (for example, the terminal device or the network device), cause the communication device to perform part or all of the steps in the methods according to the above aspects.

In a ninth aspect of the embodiments of the present disclosure, a computer program product is provided. The computer program product includes a non-transitory computer-readable storage medium storing one or more computer programs therein. The one or more computer programs, when loaded and run by a communication device (for example, the terminal device or the positioning device), cause the communication device to perform part or all of the steps in the method according to the above aspects. In some embodiments, the computer program product may be a software package.

In a tenth aspect of the embodiments of the present disclosure, a chip is provided. The chip includes a processor, and a memory storing one or more computer programs. The processor is configured to call and run the one or more computer programs from the memory to perform part or all the steps in the method as described above.

The present disclosure utilizes mobility of a terminal device. The terminal device may receive reference signals from the same network device at different positions, or transmit reference signals to the same network device from different positions. A receive phase of the reference signals may be used to position the terminal device. In the positioning process, a single receiver and a single transmitter are involved, which ensures that hardware performance at the receiver is completely consistent, and hardware performance at the transmitter is also completely consistent. Therefore, the technical solutions according to the embodiments of the present disclosure is conducive to improving positioning accuracy.

### BRIEF DESCRIPTION OF THE DRAWINGS

FIG. 1 illustrates a wireless communication system 100 according to some embodiments of the present disclosure;
FIG. 2 is a schematic diagram of estimating a direction of arrival based on an antenna array;
FIG. 3 is a schematic flowchart of a method for positioning according to some embodiments of the present disclosure;
FIG. 4 is a schematic flowchart of a method for positioning according to some embodiments of the present disclosure;
FIG. 5 is a schematic structural diagram of a terminal device according to some embodiments of the present disclosure;
FIG. 6 is a schematic structural diagram of a positioning device according to some embodiments of the present disclosure; and
FIG. 7 is a schematic structural diagram of a communication apparatus according to some embodiments of the present disclosure.

### DETAILED DESCRIPTION

The technical solutions according to embodiments of the present disclosure are described in detail with reference to the accompanying drawings.

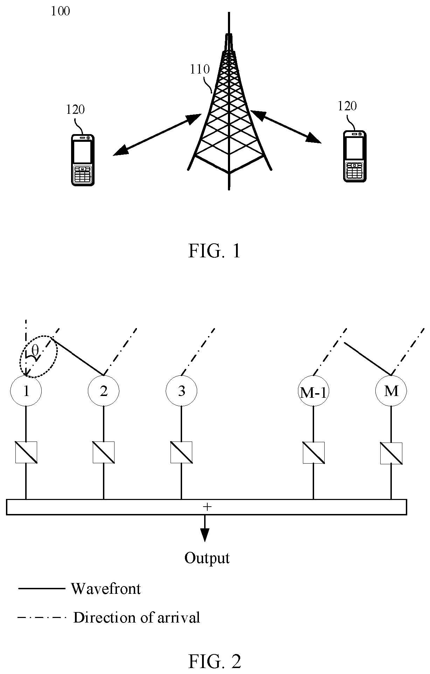

FIG. 1 illustrates a wireless communication system 100 according to some embodiments of the present disclosure. The wireless communication system 100 includes a network device 110 and a terminal device 120. The network device 110 may be a device in communication with the terminal device 120. The network device 110 may provide communication coverage for a specific geographical region, and may communicate with any terminal 120 within the coverage area.

FIG. 1 exemplarily illustrates one network device and two terminal devices. Optionally, the wireless communication system 100 may include a plurality of network devices and each of the network devices provide a coverage area for terminal devices in other quantities, which is not limited in the embodiments of the present disclosure.

Optionally, the wireless communication system 100 may further include another network entity such as a network controller, a mobility management entity, or the like, which is not limited in the embodiments of the present disclosure.

It should be understood that the technical solutions according to the embodiments of the present disclosure may be applied to various communication systems, for example: a 5^{th} generation (5G) or a new radio (NR) system, a long-term evolution (LTE) system, an LTE frequency-division duplex (FDD) system, an LTE time-division duplex (TDD) system, or the like. The technical solutions according to the present disclosure may also be applied to future communication systems, such as a 6^{th} generation (6G) mobile communication system, such as a satellite communication system or the like.

The terminal device according to the embodiments of the present disclosure may also be referred to as a user equipment (UE), an access terminal, a subscriber unit, a subscriber station, a mobile station (MS), a mobile terminal (MT), a remote station, a remote terminal, a mobile device, a user terminal, a wireless communication device, a user agent, or a user apparatus. The terminal device according to the embodiments of the present disclosure may refer to a device providing voice and data connectivity for users, or device capable of connecting to human, things, and machines, for example, a handheld device, a vehicle-mounted device or the like having a wireless connection function. The terminal device according to the embodiments of the present disclosure may be a mobile phone, a pad, a laptop, a palmtop, a mobile Internet device (MID), a wearable device, a virtual reality (VR) device, an augmented reality (AR) device, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, or the like. Optionally, the UE may serve as a base station. For example, the UE may serve as a dispatch entity, which provides sidelink signals between terminal devices in vehicle-to-everything (V2X) or device-to-device (D2D) communications or the like. For example, a cellular phone and a vehicle communicate with each other based on the sidelink signals. The cellular phone and a smart home device communicate with each other, with no need of relaying communication signals over a base station.

The network device according to the embodiments of the present disclosure may be a device for communicating with the terminal device. The network device may also be referred to as an access network device or a wireless access device. For example, the network device may be mua base station. The network device according to the embodiments of the present disclosures may refer to a radio access network (RAN) node (or device) that accesses (connects) a terminal device to a wireless network. The base station may broadly cover or replace various names such as, a node B (NodeB), an evolved base station (evolved NodeB, eNB), a next generation base station (next generation NodeB, gNB), a relay station, a transmission and reception point (TRP), a transmission point (TP), an access point (AP), a primary station MeNB, and a secondary station SeNB, a multi-standard radio (MSR) node, a home base station, a network controller, an access node, a wireless node, a transmission node, a transceiver node, a baseband unit (BBU), a remote ratio unit ( RRU), an active antenna unit (AAU), a remote radio head (RRH), and a central unit (CU), a distributed unit (DU), a positioning node, and the like. The base station may be a macro base station, a micro base station, a relay node, a donor node, or the like, or a combination thereof. The base station may also refer to a communication module, a modem, or a chip configured in the above apparatus or device. The base station may also be a mobile switching center and a device in D2D, V2X, or machine-to-machine (M2M) communication to assume the function of a base station, a network-side device in a 6G network, a device in a future communication system to assume the function of a base station, or the like. The base station may support networks of the same or different access technologies. The embodiments of the present disclosure do not limit the specific technology the specific device form adopted by a network device.

The base station may be stationary or mobile. For example, a helicopter or unmanned aerial vehicle may be configured to serve as a mobile base station, and one or more cells may move depending on the location of the mobile base station. In other examples, the helicopter or unmanned aerial vehicle may be configured to serve as a device to communicate with another base station.

In some deployments, the network device according to the embodiments of the present disclosure may refer to a CU or a DU, or the network device includes a CU and a DU. The gNB may also include an AAU.

The network device and the terminal devices may be deployed on land, including indoor or outdoor, hand-held, or vehicle-mounted; or may be deployed on the water surface; or may be deployed on airplanes, balloons, and satellites. In the embodiments of the present disclosure, the scenario wherein the network device and the terminal devices are located is not limited.

It will be understood that all or part of the functionality of the communication devices in the present disclosure may also be implemented by software functions running on hardware, or by virtualization functions instantiated on a platform, such as a cloud platform.

Integrated sensing and communication (ISAC) may refer to a combination of communication and sensing. Sensing involves using specific means to detect states of surrounding environments, such as detecting positions, directions, altitudes, velocities, and distances of objects; and may also be used to determine shapes of the objects and even human action and gestures. In a narrow sense, ISAC may refer to a communication system with capabilities such as ranging, velocity measurement, angle measurement, imaging, target detection, target tracking, and target recognition. In an early stage, ISAC is also known as "radar-communication integration." In a broad sense, however, ISAC refers to a communication system capable of sensing the attributes and states of all services, networks, users, and terminals, as well as environmental objects. The sensing capabilities thereof may surpass those of traditional radars. As the communication spectrum expands from the traditional sub-6 GHz to millimeter wave (mmWave), the reduction in wavelength continuously enhances sensing capabilities.

ISAC has been now widely applied. For example, to prevent problems such as information leakage, collisions, and noise caused by the unregulated flight of unmanned aerial vehicles (UAVs), efficient and low-cost deployment of low-altitude security systems are desired. Although various detection solutions are currently available in the UAV security market, these solutions all face numerous challenges in terms of technology, efficiency, and cost. The ISAC technology may transform a plurality of base stations in an area requiring a low-altitude security system into radars. This, in combination with computational resources within the base stations, enables rapid establishment of the low-altitude security system. As long as base station signals are reachable, intrusion into UAVs may be positioned or located and tracked in real-time, and the security system may make subsequent decisions based on detection results. Conversely, based on the imaging, map construction, and environment reconstruction capabilities provided by ISAC, the system may shift from a passive to an active role, dispatching UAVs for activities such as reconnaissance and logistics delivery. Furthermore, the system may perform automatic navigation and path planning in unknown environments based on multi-station sensing capabilities. In vehicle-to-everything (V2X) scenarios, ISAC systems may sense states of traffic on the roads in real-time, and enables efficient coordination among pedestrians, vehicles, and roads, thereby ensuring traffic safety and improving operational efficiency of transportation systems. An ISAC system may leverage the advantages of high site locations and wide coverage of communication base stations to sense lane traffic flows and vehicle speed information in real-time and over a large area. Simultaneously, the ISAC system may detect road intrusions by pedestrians or animals, thereby effectively implementing road supervision, ensuring traffic safety, and enhancing traffic efficiency. In a smart home scenario, the following functions may be implemented: activating a light in response to detecting presence of a user and deactivating the light in response to detecting absence of the user; controlling one or more electrical appliances based on different user gestures, for example, virtually playing a piano; transmitting a notification to a resident in response to detecting a hazardous event, wherein the hazardous event may include a child climbing to a window or a balcony, or an elderly person falling; and triggering a security alarm in response to detecting an intrusion when the resident is absent from home. The system may identify a specific household member by performing fine-grained monitoring and recognition of the gait of the member. Furthermore, the system may analyze an activity time ratio for each household member, such as time spent in using a computer and watching television, sleeping, and walking, and an activity area and sleep quality thereof. Additionally, the system may also monitor a climate environment and manage public safety. In a climate environment monitoring scenario, leveraging the ubiquitous nature of wireless networks, a base station may transmit an integrated communication and sensing signal. Based on characteristics of wireless signal attenuation caused by water molecules, dust, and various chemical substances, the system may analyze variations in properties, such as a strength of the integrated signal, to achieve real-time monitoring of, for example, a precipitation level, pollutant gas emissions, and air quality. In terms of public safety management, real-time detection provided by a sensing function enables functionalities such as typhoon warnings, flood warnings, and dust storm warnings, thereby providing advance time for disaster prevention. In the field of healthcare, an integrated sensing and communication system, while providing high-speed communication, may also effectively implement health monitoring and management. Related technologies have already achieved the monitoring of respiration and heartbeat of a user using communication signals. When an abnormality in respiration and heart rate is detected, a warning message is transmitted back to the user in real time via a communication link, thereby realizing a real-time monitoring function. Terahertz (THz) waves may be used for detection of cancerous tissues and dental caries, as well as for the monitoring of sweat, tears, saliva, peripheral blood, and tissue fluids.

Sensing may include target detection, for example, positioning a target. Positioning may include perceiving data of the target, such as range, velocity, and angle of the target.

Due to different design and optimization objectives and different performance evaluation metrics for communication and sensing, a transmission scheme that is optimal for communication may not be optimal for sensing, and conversely, a transmission scheme that is optimal for sensing may not be optimal for communication. Therefore, to achieve integrated sensing and communication, it is necessary to consider from a fundamental level how to combine these two functions such that performance degradation for both communication and sensing is relatively small, thereby achieving the overall design objectives.

In current communication networks, a large number of base stations are deployed, and substantial collaboration is performed among a plurality of base stations. For example, base station 1 may transmit a sensing signal. Upon being reflected by a target object, the sensing signal may be received by base station 2 for sensing computation. This processing fully leverages positional differences between the base stations for target detection, such as for estimating the range and angle. However, this processing also increases the complexity of inter-BS resource coordination and affects resource utilization efficiency.

To ensure that a signal, upon being reflected by a target object, is received by base station 2 without causing interference to base station 2, the reflected signal needs to be as orthogonal as possible to other signals at base station 2. When a plurality of base stations participate in sensing, the number of resource blocks that the network side needs to coordinate and allocate increases. This reduces resource utilization and increases the complexity of resource coordination.

For single-station communication and sensing, since the receiver and transmitter share a common clock source, synchronization between the receiver and transmitter exerts little impact on sensing. For multi-station sensing, since the transmission and reception of signals are performed by different base stations, clock asynchronization between the base stations may exert a significant adverse impact on sensing accuracy. For a communication system, a microsecond-level synchronization error between base stations may satisfy basic requirements of low-latency, high-reliability communication. However, for integrated sensing and communication, where positioning accuracy needs to reach a meter or even decimeter level, a 1-microsecond synchronization error between the receiving and transmitting base stations may result in a 300-meter distance sensing error. Therefore, to achieve multi-station sensing, the synchronization error between base stations needs to be controlled at a nanosecond or even picosecond level.

In ISAC scenarios, the accuracy requirement for detecting the position of an object is stringent. For example, in scenarios such as controlling arbitrary electrical appliances through different gestures, playing a virtual piano, and identifying a child climbing a window or an elderly person falling, the positioning requirement for the sensed terminal is stringent. Furthermore, such terminals are often mobile, which further increases the difficulty of positioning.

Signal processing in a communication system may be categorized into three types: time-domain signal processing, frequency-domain signal processing, and spatial-domain signal processing. Time domain and frequency domain have a reciprocal relationship; therefore, the time-domain processing and the frequency-domain processing are interrelated, whereas the spatial-domain processing is relatively independent. In practical applications, suitable signal processing is often chosen according to actual needs.

The time-domain processing refers to acquiring desired information by using the variation of a signal on a time axis, and focuses on how the signal changes over time and is typically analyzed by observing the waveform of the signal. Time-domain processing is more suitable for describing dynamic characteristics and the evolution of a timing sequence. The frequency-domain processing refers to acquiring desired information by using the variation of a signal on the frequency axis, such as the frequency of the signal. The spatial-domain processing describes the spatial characteristics of a signal. By deploying a plurality of antenna elements in space to acquire signals from a plurality of paths, the multipath effects and interference experienced by the signal during propagation may be reduced, such that improving the performance of a receiver system is improved. Spatial sampling typically involves sampling spatial signals at different points in space at the same time.

The processing for spatial signals is described herein using a linear array as an example.

Referring to FIG. 2, the antenna array illustrated therein includes M antennas. All of the M antennas are capable of receiving signals from a transmitter. A direction of arrival may be estimated based on the signals received by two antennas. In the scheme illustrated in FIG. 2, a wavefront received by the antennas is perpendicular to the direction of arrival. According to the principle of far-field electromagnetic waves, the signals received by different antennas at the wavefront are identical. The length indicated by the ellipse in FIG. 2 represents a path difference between the signals received by antenna 1 and antenna 2. The formula for calculating the path difference is as follows: ${d}_{D} = 2 π \frac{Δφ}{λ}$
wherein d*_{D}* represents the path difference, λ represents the wavelength, and Δφ represents the phase difference.

In array signal processing, a plurality of antennas sample signals at the same instant, and this sampling is referred to as a snapshot. To ensure phase correlation between different antennas and to ensure that spatial sampling of signals complies with the spatial Nyquist theorem, a snapshot requires that the spacing between antennas be less than half a wavelength. Under this condition, it may be considered that the channels corresponding to two adjacent antennas are coherent.

According to the geometric principles of positioning, current positioning systems determine the position of an object by measuring the distance between the object and reference points. For example, when a terminal performs positioning by measuring signals from different transmitter devices (e.g., transmitters), transmitter devices at different positions are required to transmit the signals. Alternatively, when a terminal transmits a signal that is received by different receiver devices (e.g., receivers) for positioning, receiver devices at different positions are required to receive the signal. As understood from the above, during positioning of a terminal device, it is necessary to have measurement results between the terminal and at least two reference points.

There are two ways to measure the distance between an object and a reference point. One way is to determine the distance between the object and the reference point based on time difference, and the other is to determine the distance based on phase difference. These two methods are described separately hereinafter.

When positioning an object, the distance between the object and a reference point may be measured based on time of flight of a signal. Positioning is performed based on a difference in transmission instant of the signal between the object and different reference points. Time-difference-based ranging calculates the distance by measuring a time difference required for a signal to travel from different transmitter devices to a receiver device, or from a transmitter device to different receiver devices. A distance difference may be acquired by multiplying the time difference by the speed of light.

Phase-difference-based ranging may calculate the distance based on a phase difference of the propagated signal. When transmitted signals arrives at a receiver device, a phase difference is present in the signal received by the receiver device due to different distances from different transmitter devices to the receiver device or from the same transmitter device to different receiver devices. By measuring the phase difference, the distance difference from different transmitter devices to the receiver device or from the same transmitter device to different receiver devices may be inferred. The phase-difference-based ranging is commonly used in radar systems, communication systems, and some precision ranging equipment. In a global positioning system (GPS), the phase difference between a satellite and a receiver device is used to calculate a distance from the receiver device to the satellite.

Both a phase-difference-based ranging system and a time-difference-based ranging system impose stringent requirements for the synchronization of signals between different devices. For example, in a scenario where a receiver performs positioning by receiving signals from different transmitters, clocks of the different transmitters need to be synchronized, and a stringent requirement is imposed for consistency of hardware performance (e.g., hardware processing delay) of the different transmitters. Still for example, in a scenario where different receivers perform positioning by receiving a signal from a transmitter, clocks of the different receivers need to be synchronized, and a stringent requirement is imposed for consistency of hardware performance (e.g., hardware processing delay) of the receivers.

To reduce the requirement for consistency in device hardware performance, embodiments of the present disclosure propose to leverage the mobility of the terminal device. The terminal device at different positions may be construed as different transmitter devices or receiver devices. For example, the terminal device may receive reference signals from a network device at different positions, or the terminal device may transmit reference signals to a network device from different positions. Since this process involves a single transmitter device and a single receiver device, that is, the hardware performance of the transmitter device is perfectly consistent, and the hardware performance of the receiver device is perfectly consistent, errors introduced by the hardware of the transmitting or receiver device may be eliminated by processing the measurement information of the reference signals. For example, a hardware phase error of the device may be canceled using a phase difference, or a clock error of the device may be canceled using a time difference. Therefore, the technical solutions according to the embodiments of the present disclosure may improve positioning accuracy.

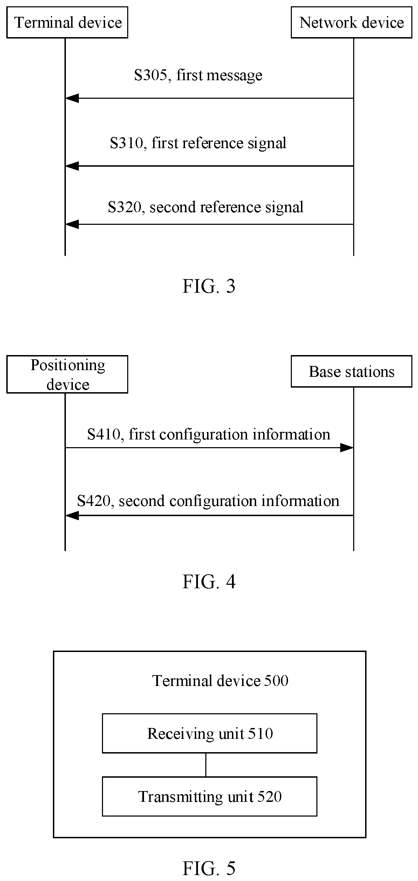

The technical solutions according to the embodiments of the present disclosure are described in detail hereinafter with reference to FIG. 3. FIG. 3 illustrates a scheme in which a terminal device serves as a receiver.

Referring to FIG. 3, in step S310, the terminal device receives a first reference signal from a network device at a first position. In other words, the network device transmits the first reference signal to the terminal device when the terminal device is at the first position.

In step S320, the terminal device receives a second reference signal from the network device at a second position. In other words, the network device transmits the second reference signal to the terminal device when the terminal device is at the second position. The first position is different from the second position.

The terminal device may be any one of the terminal devices as described above. In some embodiments, the terminal device may be a terminal device in ISAC. The network device may be any one of the network devices as described above. In some embodiments, the network device may be a base station.

The first reference signal may be any type of downlink signal. In some embodiments, the first reference signal may be a positioning reference signal (PRS). In other embodiments, the first reference signal may be a pilot signal

The second reference signal may be any type of downlink signal. In some embodiments, the second reference signal may be a PRS. In other embodiments, the second reference signal may be a pilot signal.

In some embodiments, the first reference signal and the second reference signal may be sensing signals. For example, the first reference signal and the second reference signal may be chirp signals that facilitate sensing.

The first reference signal and the second reference signal may be reference signals transmitted by the network device at different instants. For example, the network device may transmit the first reference signal to the terminal device when the terminal device is at the first position; the network device may transmit the second reference signal to the terminal device when the terminal device is at the second position. The first position is different from the second position.

In some implementations, when the terminal device moves to the first position, the terminal device receives the first reference signal; or when the terminal device moves to the second position, the terminal device receives the second reference signal.

In some implementations, the first position and the second position may be fixed positions, or, a distance between the first position and the second position may be a predetermined distance. For example, regardless of the absolute locations of the first and second positions, it is sufficient that the distance between the first position and the second position is the predetermined distance.

Since different positions correspond to different reception instants, the terminal device receiving the first reference signal at the first position may be understood as the terminal device receiving the first reference signal at a first instant, and the terminal device receiving the second reference signal at the second position may be understood as the terminal device receiving the second reference signal at a second instant. The first instant is different from the second instant.

In some implementations, the first reference signal and the second reference signal are of the same type. For example, the first reference signal and the second reference signal are reference signals transmitted by the network device to the terminal device at different instants.

In some embodiments, first measurement information of the first reference signal and second measurement information of the second reference signal are used to position the terminal device. The terminal device may receive the first reference signal from the network device at the first position, and perform a measurement on the first reference signal to acquire the first measurement information. The terminal device may receive the second reference signal from the network device at the second position, and perform a measurement on the second reference signal to acquire the second measurement information.

The first measurement information and the second measurement information may be phase information or time information. In a case where the first measurement information and the second measurement information are phase information, the terminal device may be positioned using a phase difference; or in a case where the first measurement information and the second measurement information are time information, the terminal device may be positioned using a time difference. These two cases are described separately hereinafter.

In some implementations, the first measurement information and the second measurement information are phase information. For example, the first measurement information may be a first receive phase, and the second measurement information may be a second receive phase. In a case where the receive phase of the first reference signal is the first receive phase, and the receive phase of the second reference signal is the second receive phase, the phase difference between the first receive phase and the second receive phase is used to position the terminal device. The first receive phase and the second receive phase reflect the difference in distance from the terminal device at the two positions to the network device. A positioning device may position the terminal device using the distance difference. When the terminal device measures the phase, since both the first receive phase and the second receive phase are measured by the same device (i.e., the terminal device), subtracting the phases may cancel the phase error caused by the hardware delay of the terminal device, thereby improving positioning accuracy.

In some implementations, the first measurement information and the second measurement information are time information. For example, the first measurement information may be a first reception instant, and the second measurement information may be a second reception instant. In a case where the reception instant of the first reference signal is the first reception instant, and the reception instant of the second reference signal is the second reception instant, the time difference between the first reception instant and the second reception instant is used to position the terminal device. The first reception instant and the second reception instant reflect the difference in distance from the terminal device at the two positions to the network device. A positioning device may position the terminal device using the distance difference. When the terminal device measures the reception instant, since both the first reception instant and the second reception instant are measured by the same device (i.e., the terminal device), subtracting the reception instants may cancel the timing error caused by the hardware delay of the terminal device, thereby improving positioning accuracy.

Further referring to FIG. 3, prior to steps S310 and S320, the method illustrated in FIG. 3 further includes step S305. In step S305, the terminal device receives a first message from the network device, wherein the first message is used to instruct the terminal device to receive reference signals from the network device at different positions.

Upon receiving the first message, the terminal device may receive reference signals from the network device at different positions. For example, upon receiving the first message, the terminal device receives a first reference signal from the network device at a first position and receives a second reference signal from the network device at a second position.

By receiving the reference signals at different positions only upon receiving the first message, the terminal device may avoid blind reception of the reference signals, which is conducive to reducing power consumption of the terminal device.

In some embodiments, the network device may transmit the first message to the terminal device only when a positioning device possesses a first capability. The first capability may refer to an ability of the positioning device to position the terminal device based on measurement-related information for different positions. In this case, it may be ensured that the first and second reference signals received by the terminal device are signals usable for positioning, thereby reducing the blindness of signal reception of the terminal device.

Embodiments of the present disclosure do not specifically limit the type of the first message. In some implementations, the first message may include a first request message, wherein the first request message is used to request the terminal device to transmit measurement-related information for different positions. The measurement information for different positions may refer to measurement information of the reference signals received by the terminal device at different positions. Upon receiving the first request message, the terminal device receives the reference signals from the network device at different positions. The measurement-related information includes measurement information and/or a difference of measurement information. As one example, the first request message is used to request the terminal device to transmit measurement information for different positions. For example, the first request message is used to request the terminal device to transmit the first measurement information and the second measurement information. As another example, the first request message is used to request the terminal device to transmit a difference of measurement information for different positions. For example, the first request message is used to request the terminal device to transmit the difference between the first measurement information and the second measurement information.

In some implementations, the first message may include first configuration information, wherein the first configuration information is used to configure the terminal device to transmit measurement-related information from different positions. The measurement-related information includes measurement information and/or a difference of measurement information. As one example, the first configuration information is used to configure the terminal device to transmit measurement information from different positions. For example, the first configuration message is used to configure the terminal device to transmit the first measurement information and the second measurement information. As another example, the first configuration information is used to configure the terminal device to transmit a difference of measurement information from different positions. For example, the first configuration message is used to configure the terminal device to transmit the difference between the a first measurement information and the second measurement information.

In some implementations, the first message may include second configuration information, wherein the second configuration information is used to configure a reference signal group for a plurality of base stations, wherein reference signals in the reference signal group are used to position the terminal device. For example, the reference signals in the reference signal group may be used to perform one position calculation. A position calculation may refer to determining the position information of the terminal device at the same location.

In some embodiments, in a case where the terminal device moves at a high speed, causing the first position and the second position to be far apart, the scattering environments of the first and second positions may differ significantly, and the multipath environments may be different. In such a case, the difference of the measurement information for these two positions may not be used to position the terminal device.

In some embodiments, the terminal device may transmit first indication information to the network device. This first indication information may be used to indicate whether the difference between the first measurement information and the second measurement information is usable for positioning the terminal device. Upon acquiring the first and second measurement information, the terminal device may determine whether their difference is usable for positioning. In a case where the difference between the first and second measurement information is not usable for positioning, a positioning device may discard this information and use other measurement information to position the terminal device, thereby avoiding an adverse impact on positioning accuracy.

In some embodiments, the terminal device may determine, based on a first time range, whether the difference between the first measurement information and the second measurement information is usable for positioning the terminal device. The first time range indicates a time difference between the reception instants of two reference signals that are usable for positioning the terminal device. In other words, in a case where the time difference between the reception instant of the first reference signal and the reception instant of the second reference signal is less than or equal to the first time range, the difference between the first measurement information and the second measurement information is usable for positioning. In a case where the difference between the reception instant of the first reference signal and the reception instant of the second reference signal is greater than the first time range, then the difference between the first measurement information and the second measurement information cannot be used to position the terminal device.

In some embodiments, in a case where the time difference between the reception instants of the first and second reference signals is greater than the first time range, the first position and the second position are far apart, and the channel environments for the signals measured by the terminal device at these two positions are different. In this case, taking the difference of the measurement information may not necessarily cancel the interference caused by the channel environment. Therefore, under this condition, the difference between the first and second measurement information cannot be used to position the terminal device.

Embodiments of the present disclosure do not specifically limit the method for determining the first time range. For example, the first time range may be determined by the network device. Still for example, the first time range may be determined by the terminal device. These two cases are described separately hereinafter.

In some embodiments, the first time range may be determined by the network device. For example, the network device may transmit second indication information to the terminal device. The second indication information may be used to indicate the first time range.

In some implementations, the first time range may be related to a time difference between transmission instants of different reference signals transmitted by the network device. This time difference may, for example, be a difference between the transmission instants of reference signals that may participate in one position calculation. In other words, the first time range may be a time difference between transmission instants of two reference signals that are usable for positioning the terminal device. Since the transmission instant and the reception instant of a reference signal correspond to each other, the time difference of reception instants may be indirectly indicated through the time difference of transmission instants.

In some implementations, the first time range may be related to a time difference between reception instants of different reference signals received by the terminal device. The time difference may be, for example, a difference between reception instants of reference signals that may participate in one position calculation. In other words, the first time range may be a time difference between reception instants of two reference signals that may be used to position the terminal device.

In some implementations, the first time range may be related to a first instant. The first instant may be a reference instant for the first time range, and the first time range may be the time difference of transmission instants of reference signals transmitted by different base stations. The first instant may be used to determine the transmission instants of reference signals from different base stations, such that a reception instant or a reception instant window for the terminal device to receive the reference signals is determined. In a case where the reception instant of the first and/or second reference signal is not at the reception instant or not within the reception instant window, the difference between the first measurement information and the second measurement information may not be used to position the terminal device. In a case where the reception instant of the first reference signal and/or the second reference signal is the reception instant or is within the reception instant window, the difference between the first measurement information and the second measurement information may be used to position the terminal device.

In some embodiments, the first time range may be a time range desired by the terminal device. The terminal device may determine the desired time range based on its current state. For example, the terminal device may determine the first time range based on its moving speed. In a case where the moving speed of the terminal device is high, the first time range may be smaller; or in a case where the moving speed is low, the first time range may be larger. Still for example, the desired time range may be determined based on the moving speed and a carrier frequency of the reference signal. It is known that coherence time is the reciprocal of Doppler shift, and coherence time determines the time interval over which the channel is correlated. The desired time may be determined based on the coherence time. Therefore, based on the moving speed and the carrier frequency, the time range desired by the terminal device may be Lc/(2vf), wherein c represents the speed of light, L represents an empirical factor, v represents the moving speed of the terminal device, and f represents the carrier frequency of the reference signal. The empirical factor may be determined by the terminal device based on the environment and statistics. The moving speed of the terminal device may be determined by instruments on a vehicle, which is not limited in the embodiments of the present disclosure.

In some embodiments, the terminal device may transmit second indication information to the network device, wherein the second indication information may be used to indicate the first time range. In other words, the second indication information may be used to indicate the time range desired by the terminal device. In some implementations, the network device may configure, based on the second indication information, the transmission instants of reference signals for a base station (e.g., one or more base stations), such that the transmission instants of the reference signals from the base station fall within the first time range.

In some implementations, a positioning device may control the transmission instants of reference signals transmitted by the base station, such that the reference signals from the base station are within a reasonable time range. The reasonable time range may be, for example, the first time range.

In some embodiments, the first time range may be indicated by the network device to the positioning device, or may be indicated by the terminal device to the positioning device, or may be determined by the positioning device itself, or may be a time range predefined in a protocol, which is not limited in the embodiments of the present disclosure.

The present disclosure achieves the effect of multi-point transmission or multi-point reception by using a mobile terminal device, which transmits or receives signals at different positions, in place of separate transmitter or receiver devices in a positioning system, thereby facilitating triangulation or geometric positioning. When the terminal device moves, the position of the terminal device changes. The two positions of the terminal device, together with the position of the base station, yield three points. These three points may serve as the points for triangulation or geometric positioning. Among these three points, there are two points with unknown positions, namely, the two positions of the terminal device. In current positioning systems, the terminal device interacts with a plurality of (e.g., two or more) base stations simultaneously via reference signals. The plurality of base stations and the terminal device form a plurality of points for triangulation or geometric positioning. Among the plurality of points, only the position of the terminal device is unknown, and its position may be acquired by solving the equations.

Although in the present disclosure, the terminal device has two unknown positions, in practice, these two positions may be estimated. In a practical system, to improve positioning accuracy, a plurality of base stations may participate in the positioning. The participation of a plurality of base stations allows for the acquisition of more information, which may in turn be used to acquire the position information of the terminal device at two positions thereof.

For illustrative purposes, assuming the two positions of the terminal device are (x1, y1) and (x2, y2) respectively, then the terminal device measures the phase of the reference signal transmitted by base station n at the two positions to acquire a phase difference ω*ₙ*. Assuming the position coordinates of base station n are (an, bn), then the distance difference from base station n to the two positions may be calculated based on the position coordinates, and may also be calculated based on the phase difference. Assuming the distance differences calculated by the two methods are equal, the following formula is derived: $mod \left(\sqrt{{\left({x}_{1}-{a}_{n}\right)}^{2} + {\left({y}_{1}-{b}_{n}\right)}^{2}}-\sqrt{{\left({x}_{2}-{a}_{n}\right)}^{2} + {\left({y}_{2}-{b}_{n}\right)}^{2}},λ\right) - {λω}_{n} / 2 π = 0$

Let: $\begin{matrix}{f}_{n} \left({x}_{1}, {y}_{1}, {x}_{2}, {y}_{2}\right) \\ = mod \left(\sqrt{{\left({x}_{1}-{a}_{n}\right)}^{2} + {\left({y}_{1}-{b}_{n}\right)}^{2}}-\sqrt{{\left({x}_{2}-{a}_{n}\right)}^{2} + {\left({y}_{2}-{b}_{n}\right)}^{2}},λ\right) - {λω}_{n} / 2 π\end{matrix}$

When the number of base stations is greater than or equal to 4, the position of the terminal device may be estimated by solving the following equations: $\left\{\begin{matrix}{f}_{1} \left({x}_{1}, {y}_{1}, {x}_{2}, {y}_{2}\right) = 0 \\ {f}_{2} \left({x}_{1}, {y}_{1}, {x}_{2}, {y}_{2}\right) = 0 \\ ⋮ \\ {f}_{N} \left({x}_{1}, {y}_{1}, {x}_{2}, {y}_{2}\right) = 0\end{matrix}\right.$

N is greater than or equal to 4.

In some embodiments, a plurality of base stations transmit reference signals at different times. That is, different base stations transmit reference signals to the terminal device when the terminal device is at different positions. For the different base stations, the position of the terminal device has changed when the base stations transmit the respective reference signals. In this case, the formula is transformed as follows: $\left\{\begin{matrix}{f}_{1} \left({x}_{1}, {y}_{1}, {x}_{2}, {y}_{2}\right) = 0 \\ {f}_{2} \left({x}_{3}, {y}_{3}, {x}_{4}, {y}_{4}\right) = 0 \\ ⋮ \\ {f}_{N} \left({x}_{2 N - 1}, {y}_{2 N - 1}, {x}_{2 N}, {y}_{2 N}\right) = 0\end{matrix}\right.$

As seen from the above formula, although the number of base stations and the number of equations have increased, the number of unknowns has also increased, which is not conducive to determining the position of the terminal device. Therefore, it is necessary to constrain the transmission instants of the reference signals from the various base stations, such that the base stations transmit the reference signals within the same time frame as much as possible.

When a positioning device is to support positioning based on the reporting of the difference of measurement information from the terminal device at different positions, the positioning device needs to transmit, to various base stations, information supporting this type of positioning, which notifies the base stations of the time to be configured for the PRS and the time offset, that is, a time offset range for PRS transmissions from different base stations. Within a specific time offset range, the position change of the terminal device is small, and it may be considered that the position of the terminal device has not changed. In this way, even when measurements are performed for signals from different base stations, it may be assumed that the terminal device is at the same position, and thus, no new unknowns are introduced during the position calculation.

The technical solutions according to the embodiments of the present disclosure are now described in detail with reference to FIG. 4. It should be noted that the technical solutions illustrated in FIG. 4 may be used independently or in combination with the technical solutions illustrated in FIG. 3, which is not specifically limited in the embodiments of the present disclosure.

Referring to FIG. 4, in step S410, a positioning device transmits first configuration information to a plurality of base stations. The first configuration information may be used to configure time information for reference signals transmitted by the plurality of base stations. The time information may be a time range or a transmission instant. The transmission instant may include one or more transmission instants. The reference signals transmitted by the plurality of base stations may be used to position a terminal device.

In some embodiments, the positioning device may transmit the first configuration information to each of the plurality of base stations. The first configuration information transmitted by the positioning device to the plurality of base stations may be the same. In other words, the time information of the reference signals configured by the positioning device for different base stations may be the same. In other words, the reference signals transmitted by the plurality of base stations have identical time information.

In some embodiments, the positioning device transmitting the first configuration information to the plurality of base stations may mean that the positioning device transmits a configuration request message to the plurality of base stations, wherein the configuration request message is used to request that the reference signals transmitted by the plurality of base stations be configured within the same time range. For example, the positioning device may only indicate to the plurality of base stations the need to transmit the reference signals within the same time range, without specifically indicating the time range and/or transmission instant for transmitting the reference signals. The plurality of base stations may determine a time range and/or transmission instants for transmitting the reference signals via negotiation, which may increase the flexibility of transmitting the reference signals.

The plurality of base stations in the embodiments of the present disclosure may be base stations in a base station group.

In step S420, the positioning device receives second configuration information from the plurality of base stations. The second configuration information includes configuration information of reference signals determined by the plurality of base stations based on the time information. A base station may configure the transmission instant of a reference signal at the time or within the time range configured by the first configuration information.

In some embodiments, each of the plurality of base stations may transmit the second configuration information to the positioning device. The second configuration information transmitted by the plurality of base stations to the positioning device may be the same or different.

In some embodiments, the configuration information of the reference signals may include transmission instants of the reference signals or a transmission time range of the reference signals.

In some embodiments, the second configuration information may include information related to the transmission instants of the reference signals. For example, upon receiving the first configuration information from the positioning device, the base station may determine the transmission instants of the reference signals based on the first configuration information. In addition, the base station may also transmit information related to the transmission instants of the reference signals to the positioning device.

In some embodiments, the reference signals transmitted by the plurality of base stations having identical time information may mean that the transmission instants of the reference signals transmitted by the plurality of base stations are the same. For example, the plurality of base stations may transmit reference signals to the terminal device at the same time. In other words, the time information for the reference signals transmitted by the plurality of base stations may mean that the transmission instants of the reference signals transmitted by the plurality of base stations are within a predetermined time range. For example, the plurality of base stations may transmit reference signals to the terminal device within the predetermined time range. In this case, the transmission instants of the reference signals transmitted by the plurality of base stations may be the same or different, as long as the transmission instants of the reference signals transmitted by the plurality of base stations fall within the predetermined time range.

In some embodiments, the predetermined time range may be determined based on a first instant and a first offset. The first offset may be an offset relative to the first instant. The first instant may be a start time of the predetermined time range, or an end time of the predetermined time range, or any time within the predetermined time range.

In some implementations, the predetermined time range may be acquired by using the first instant as a reference and then applying the first offset.

In some embodiments, the first offset may be an offset predefined in a protocol, or, the first offset may be indicated to the positioning device by a network device, or, the first offset may be indicated to the positioning device by the terminal device.

In some embodiments, upon receiving the second configuration information from the base station, the positioning device may determine whether the second configuration information is configuration information determined based on the first configuration information. For example, the positioning device may determine whether the transmission instant of the reference signal configured in the second configuration information satisfies a time requirement configured in the first configuration information. In a case where the second configuration information is not configuration information determined based on the first configuration information, the positioning device may request the base station to retransmit the configuration information.

In some embodiments, each of the plurality of base stations may transmit a response message to the positioning device. The response message may be used to indicate whether the second configuration information is determined based on the first configuration information. The positioning device may determine, in response to the response message, whether the second configuration information is determined based on the first configuration information.

The positioning device in the embodiments of the present disclosure may be a unit with a positioning calculation function. The positioning device may be a positioning server, a location management function (LMF), a serving cell, a positioning reference unit, or a terminal device.

The method embodiments of the present disclosure have been described in detail above with reference to FIG. 1 to FIG. 4. Hereinafter, apparatus embodiments of the present disclosure are described in detail with reference to FIG. 5 to FIG. 7. It should be understood that the descriptions of the method embodiments and the apparatus embodiments correspond to each other; therefore, for parts not described in detail, reference may be made to the preceding method embodiments.

FIG. 5 is a schematic block diagram of a terminal device 500 according to some embodiments of the present disclosure. The terminal device 500 illustrated in FIG. 5 may be any of the terminal devices as described above. The terminal device 500 may include a receiving unit 510 and a transmitting unit 520.

The receiving unit 510 is configured to receive a first message from a network device, wherein the first message is used to instruct the terminal to receive reference signals from the network device at different positions.

The transmitting unit 520 is configured to receive a first reference signal from the network device at a first position.

The transmitting unit 520 is further configured to receive a second reference signal from the network device at a second position.

First measurement information of the first reference signal and second measurement information of the second reference signal are used to position the terminal device.

In some possible implementations, the transmitting unit is further configured to transmit first information to the network device, wherein the first information includes a difference between the first measurement information and the second measurement information, the difference being used to position the terminal device.

In some possible implementations, the difference includes one or more of: a difference between a first reception phase of the first reference signal and a second reception phase of the second reference signal; or a difference between a first reception instant of the first reference signal and a second reception instant of the second reference signal.

In some possible implementations, the first message satisfies one or more of the following conditions: the first message includes a first request message, wherein the first request message is used to request the terminal device to transmit measurement information for different positions and/or a difference of measurement information for different positions; the first message includes first configuration information, wherein the first configuration information is used to configure the terminal device to transmit measurement information from different positions and/or a difference of measurement information from different positions; or the first message includes second configuration information, wherein the second configuration information is used to configure a reference signal group for a plurality of base stations, wherein reference signals in the reference signal group are used to position the terminal device.

In some possible implementations, the transmitting unit is further configured to transmit first indication information to the network device, wherein the first indication information is used to indicate whether the difference between the first measurement information and the second measurement information is usable for positioning the terminal device.

In some possible implementations, the terminal device further includes a determining unit, configured to determine, based on a first time range, whether the difference between the first measurement information and the second measurement information is usable for positioning the terminal device, wherein the first time range is used to indicate a time difference between receive times of two reference signals that are usable for positioning the terminal device.

In some possible implementations, the first time range is determined by the network device, or the first time range may be a time range predefined in a protocol.

In some possible implementations, the receiving unit is further configured to: receive second indication information from the network device, wherein the second indication information is used to indicate the first time range.

In some possible implementations, the first time range is related to one or more of: a time difference between transmission instants of different reference signals transmitted by the network device; a time difference between reception instants of different reference signals received by the terminal device; or a first instant, wherein the first instant is a reference time of the first time range, and the first time range is a time difference between transmission instants of reference signals transmitted by different base stations.

In some possible implementations, the first time range is a time range desired by the terminal device.

In some possible implementations, the transmitting unit is further configured to transmit third indication information to the network device, wherein the third indication information is used to indicate the first time range.

In some possible implementations, the time range desired by the terminal device is determined based on formula Lc/(2vf), wherein c represents a speed of light, L represents an empirical factor, v represents a moving speed of the terminal device, and f represents a carrier frequency of the reference signal.

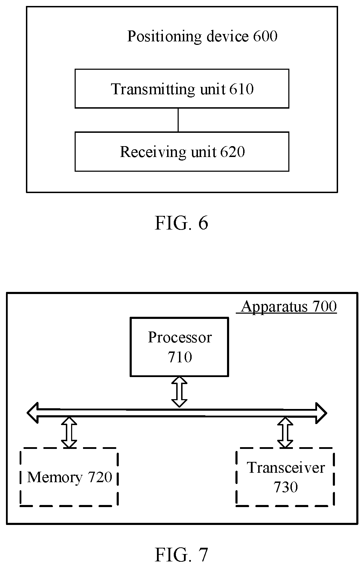

In an optional embodiment, the receiving unit 510 and the transmitting unit 520 may be designed as a transceiver 730, and the determining unit may be a processor 710. The terminal device 500 may further include a memory 720, as specifically illustrated in FIG. 7.

FIG. 6 is a schematic structural diagram of a positioning device according to some embodiments of the present disclosure. The positioning device 600 illustrated in FIG. 6 may be any of the positioning devices as described above. The positioning device 600 may include a transmitting unit 610 and a receiving unit 620.

The transmitting unit 610 is configured to transmit first configuration information to a plurality of base stations, wherein the first configuration information is used to configure time information for reference signals transmitted by the plurality of base stations.

The receiving unit 620 is configured to receive second configuration information from the plurality of base stations, wherein the second configuration information includes configuration information of the reference signals, wherein the configuration information is determined by the plurality of base stations based on the time information.

The reference signals transmitted by the plurality of base stations have identical time information, and the reference signals transmitted by the plurality of base stations are used to position a terminal device.

In some possible implementations, the reference signals transmitted by the plurality of base stations having identical time information includes at least one of the following cases: transmission instants of the reference signals transmitted by the plurality of base stations are the same; or transmission instants of the reference signals transmitted by the plurality of base stations are within a predetermined time range.

In some possible implementations, the predetermined time range is determined based on a first instant and a first offset.

In some possible implementations, the positioning device further includes a determining unit, configured to determine whether the second configuration information is configuration information determined based on the first configuration information.

In some possible implementations, the receiving unit is further configured to receive a response message from the plurality of base stations, wherein the response message is used to indicate whether the second configuration information is determined based on the first configuration information.

In some possible implementations, the transmitting unit is configured to transmit a configuration request message to the plurality of base stations, wherein the configuration request message is used to request that the reference signals transmitted by the plurality of base stations be configured within a same time range.

In some embodiments, the transmitting unit 610 and the receiving unit 620 may be designed as a transceiver 730, and the determining unit may be a processor 710. The positioning device 900 may further include a memory 720, as specifically illustrated in FIG. 7.

FIG. 7 is a schematic diagram of a communication apparatus 700 according to some embodiments of the present disclosure. The dotted lines in FIG. 7 indicate that the unit or module is optional. The apparatus 700 may be employed to perform the method according to the above method embodiments. The apparatus 700 may be a chip or a communication device. The communication device may be any network device as described above. For example, the communication device may be a terminal device or a positioning device.

The apparatus 700 may include one or more processors 710. The processor 710 may support implementation of the method according to the above method embodiments by the apparatus 700. The processor 710 may be a general purpose processor or an application-specific processor. For example, the processor may be a central processing unit (CPU). The processor may be a general processor, a digital signal processor (DSP), an application-specific integrated circuit (ASIC), a field-programmable gate array (FPGA) or another programmable logic device, a discrete gate or transistor logic device, or a discrete hardware component, or the like. The general-purpose processor may be a microprocessor or any customary processor or the like.

The apparatus 700 may further include one or more memories 720. The memory 720 has stored thereon a program that is executable by the processor 710 to cause the processor 710 to perform the method described in the above method embodiments. The memory 720 may be separate from the processor 710 or integrated within the processor 710.

The apparatus 700 may also include a transceiver 730. The processor 710 may communicate with other devices or chips by the transceiver 730. For example, the processor 710 may communicate (transmit and receive) data with other devices or chips by the transceiver 730.

Some embodiments of the present disclosure further provide a computer-readable storage medium configured to store one or more programs. The computer-readable storage medium may be applied to a communication device according to the embodiments of the present disclosure, and the computer program causes a computer to perform the method performed by the communication device according to the respective embodiments of the present disclosure.

Some embodiments of the present disclosure further provide a computer program product. The computer program product includes one or more programs. The computer program may be applied to a communication device according to the embodiments of the present disclosure, and the computer program causes a computer to perform the method performed by the communication device according to the respective embodiments of the present disclosure.

Some embodiments of the present disclosure further provide a computer program. The computer program may be applied to a communication device according to the embodiments of the present disclosure, and the computer program causes a computer to perform the method performed by the communication device according to the respective embodiments of the present disclosure.

It should be understood that the terms "system" and "network" in the specification are generally exchanged. Further, the terms used herein are for the purpose of describing particular embodiments only and are not intended to limit the present disclosure. The terms such as "first," "second," "third," "fourth," and the like in the specifications, claims and the accompanying drawings of the present disclosure are intended to distinguishing different objects but are not intended to define a specific sequence. In addition, terms "comprise," "include," and variations thereof are intended to define a non-exclusive meaning.

In the embodiments of the present disclosure, the term "indication" mentioned in the specification may indicate a direct indication, an indirect indication, or an association. By way of example, the expression "A indicates B" may mean that A directly indicates B, e.g., B may be obtained by A; or mean that A indicates B indirectly, for example A indicates C, and B may be obtained by C; or mean that an association is present between A and B.

In the embodiments of the present disclosure, the term "comprise" or derivatives thereof may refer to direct inclusion or indirect inclusion. Optionally, the term "comprise" or derivatives thereof as used in the embodiments of the present disclosure may be replaced with "indicate" or "used to determine, or for determining." For example, "A comprises B" may be replaced with "A indicates B" or "A is used to determine B."

In the embodiments of the present disclosure, the expression "B corresponding to A" means that B is associated with A, from which B may be determined. However, it should also be understood that determining B from A does not mean determining B from A alone, and B may also be determined from A and/or other information.

In the embodiments of the present disclosure, the term "correspond" or derivatives thereof may mean that there is a direct correspondence or an indirect correspondence between the two, that a correlation is present between the two, and that there is a relationship between indicating and being indicated, configuring and being configured, or the like.

In embodiments of the present disclosure, "pre-defined" or "pre-configured" may be implemented by pre-storing a corresponding code, table, or other means that may be used to indicate relevant information in a device (e.g., including a terminal device and a network device), and the present disclosure does not limit the specific implementation thereof. For example, the term "predefined" may refer to "defined in the protocol."

In embodiments of the present disclosure, the term "protocol" may refer to a standard protocol in the field of communications, and may include, for example, the LTE protocol, the NR protocol, and related protocols used in future communication systems, without limitation.

In the description of the embodiments of the present disclosure, the term "and/or" is merely an association relationship for describing associated objects, which represents that there may exist three types of relationships. For example, the phrase "A and/or B" may indicate (A), (B), or (A and B). In addition, the forward-slash symbol "/" generally represents an "or" relationship between associated objects before and after the symbol.

It should be understood that in various embodiments of the present disclosure, the sequence numbers of the above various processes or steps do not denote a preferred sequence of performing the processes or steps; and the sequence of performing the processes and steps should be determined according to the functions and internal logics thereof, which shall not cause any limitation to the implementation process of the embodiments of the present disclosure.

In the several embodiments provided in the present disclosure, it should be understood that the disclosed system, apparatus and method may be practiced in other manners. The above described device embodiments are merely illustrative. For example, the unit division is merely logical function division and may be other divisions in actual practice. For example, a plurality of units or components may be combined or integrated into another device, or some features may be ignored or not performed. Additionally, the displayed or discussed mutual couplings or direct couplings or communication connections may be implemented through some interfaces. The indirect couplings or communication connections between the devices or units may be implemented in electronic, mechanical or other forms.

The units which are described as separate components may be physically separated or may be not physically separated, and the components which are illustrated as units may be or may not be physical units, that is, the components may be located in the same position or may be distributed into a plurality of network units. Some of or all of the units may be selected according to actual needs to achieve the objectives of the solutions of the embodiments.

In addition, functional units in the embodiments of the present disclosure may be integrated into one processing unit, or each of the units may exist along physically, or two or more units may be integrated into one unit.

In the above embodiments, the technical solutions may be totally or partially practiced by software, hardware, firmware or any combination thereof. During practice by software, the technical solutions may be totally or partially implemented in the form of a computer program product. The computer program product includes one or a plurality of computer-executable instructions. The computer program instructions, when loaded and executed on a computer, may cause the computer to totally or partially perform the procedures or functions in the embodiments of the present disclosure. The computer may be a general computer, a dedicated computer, a computer network, or another programming device. The computer-executable instructions may be stored in a computer-readable storage medium, or transferred from one computer-readable storage medium to another. For example, the computer-executable instructions may be transmitted from one website, computer, server or data center to another in a wired fashion, for example, a coaxial cable, an optical fiber, a digital subscriber line (DSL) or a wireless fashion, for example, an infrared ray, a radio, a microwave or the like. The computer-readable storage medium may be any available medium that is accessible or a data storage device such as a server, a data center or the like integrated with one or a plurality of available media. The available medium may be a magnetic medium, for example, a floppy disk, a hard disk or a magnetic tape, an optical medium, for example, a digital versatile disc (DVD), or a semiconductor medium, for example, a solid state disk (SSD) or the like.

The above embodiments are used only for illustrating the present disclosure, but are not intended to limit the protection scope of the present disclosure. Various modifications and replacements readily derived by those skilled in the art within technical disclosure of the present disclosure shall fall within the protection scope of the present disclosure. Therefore, the protection scope of the present disclosure is subject to the appended claims.

## Claims

1. A method for positioning, comprising:
receiving, by a terminal device, a first message from a network device, wherein the first message is used to instruct the terminal device to receive reference signals from the network device at different positions;
receiving, by the terminal device at a first position, a first reference signal from the network device; and
receiving, by the terminal device at a second position, a second reference signal from the network device;
wherein first measurement information of the first reference signal and second measurement information of the second reference signal are used to position the terminal device.

2. The method according to claim 1, further comprising:
transmitting, by the terminal device, first information to the network device, wherein the first information comprises a difference between the first measurement information and the second measurement information, wherein the difference is used to position the terminal device.

3. The method according to claim 1, wherein the difference comprises one or more of:
a difference between a first receive phase of the first reference signal and a second receive phase of the second reference signal; or
a difference between a first receive time of the first reference signal and a second receive time of the second reference signal.

4. The method according to any one of claims 1 to 3, wherein the first message satisfies one or more of the following conditions:
the first message comprises a first request message, wherein the first request message is used to request the terminal device to transmit measurement information for different positions and/or a difference of measurement information for different positions;
the first message comprises first configuration information, wherein the first configuration information is used to configure the terminal device to transmit measurement information from different positions and/or a difference of measurement information from different positions; and
the first message comprises second configuration information, wherein the second configuration information is used to configure a reference signal group for a plurality of base stations, wherein reference signals in the reference signal group are used to position the terminal device.

5. The method according to any one of claims 1 to 4, further comprising:
transmitting, by the terminal device, first indication information to the network device, wherein the first indication information is used to indicate whether the difference between the first measurement information and the second measurement information is usable for positioning the terminal device.

6. The method according to claim 5, further comprising:
determining, by the terminal device based on a first time range, whether the difference between the first measurement information and the second measurement information is usable for positioning the terminal device, wherein the first time range is used to indicate a time difference between receive times of two reference signals that are usable for positioning the terminal device.

7. The method according to claim 6, wherein the first time range is determined by the network device or is a range predefined by a protocol.

8. The method according to claim 7, further comprising:
receiving, by the terminal device, second indication information from the network device, wherein the second indication information is used to indicate the first time range.

9. The method according to claim 7, wherein the first time range is related to one or more of:
a time difference between transmit times of different reference signals transmitted by the network device;
a time difference between receive times of different reference signals received by the terminal device; or
a first instant, wherein the first instant is a reference time for the first time range, and the first time range is a time difference of transmit times of reference signals transmitted by different base stations.

10. The method according to claim 6, wherein the first time range is a time range desired by the terminal device.

11. The method according to claim 10, further comprising:
transmitting, by the terminal device, third indication information to the network device, wherein the third indication information is used to indicate the first time range.

12. The method according to claim 10 or 11, wherein the time range desired by the terminal device is determined based on formula Lc/(2vf), wherein c represents a speed of light, L represents an empirical factor, v represents a moving speed of the terminal device, and f represents a carrier frequency of the reference signal.

13. A method for positioning, comprising:
transmitting, by a positioning device, first configuration information to a plurality of base stations, wherein the first configuration information is used to configure time information for reference signals transmitted by the plurality of base stations; and
receiving, by the positioning device, second configuration information from the plurality of base stations, wherein the second configuration information comprises configuration information of the reference signals, wherein the configuration information is determined by the plurality of base stations based on the time information;
wherein the reference signals transmitted by the plurality of base stations have identical time information, and the reference signals transmitted by the plurality of base stations are used to position a terminal device.

14. The method according to claim 13, wherein the reference signals transmitted by the plurality of base stations having identical time information comprises at least one of the following cases:
transmission instants of the reference signals transmitted by the plurality of base stations are the same; or
transmission instants of the reference signals transmitted by the plurality of base stations are within a predetermined time range.

15. The method according to claim 14, wherein the predetermined time range is determined based on a first instant and a first offset.

16. The method according to any one of claims 13 to 15, further comprising:
determining, by the positioning device, whether the second configuration information is configuration information determined based on the first configuration information.

17. The method according to any one of claims 13 to 16, further comprising:
receiving, by the positioning device, a response message from the plurality of base stations, wherein the response message is used to indicate whether the second configuration information is determined based on the first configuration information.

18. The method according to any one of claims 13 to 17, wherein transmitting, by the positioning device, the first configuration information to the plurality of base stations comprises:
transmitting, by the positioning device, a configuration request message to the plurality of base stations, wherein the configuration request message is used to request that the reference signals transmitted by the plurality of base stations be configured within a same time range.
